(19) Europäisches Patentamt
European Patent Office
Office européen des brevets

(11) EP 2 827 282 A1

(12) DEMANDE DE BREVET EUROPEEN

(43) Date de publication:
21.01.2015 Bulletin 2015/04

(51) Int Cl.:
*G06K 9/00* (2006.01)

(21) Numéro de dépôt: 14177032.1

(22) Date de dépôt: 15.07.2014

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME

(30) Priorité: 15.07.2013 FR 1356928

(71) Demandeur: Morpho
92130 Issy-les-Moulineaux (FR)

(72) Inventeurs:
• Picard, Sylvaine
92445 ISSY LES MOULINEAUX (FR)
• Ketchantang, William
92445 ISSY LES MOULINEAUX (FR)

(74) Mandataire: Maillet, Alain
Cabinet Le Guen Maillet
5, place Newquay
B.P. 70250
35802 Dinard Cedex (FR)

(54) **Procédé de vérification de la véracité d'un doigt ou d'une paume**

(57) L'invention concerne un procédé de vérification (200) de la véracité d'un doigt par un dispositif de vérification comportant un dispositif de capture par tomographie par cohérence optique de face (FF OCT) prévu pour capturer au moins une image d'un plan parallèle à la lame du doigt et une unité de traitement, le procédé comportant:
- une étape de capture (202) au cours de laquelle le dispositif de capture capture une image OCT de face du doigt,
- une étape de calcul de matrice de co-occurrence (204) au cours de laquelle l'unité de traitement calcule la matrice de co-occurrence de l'image ainsi capturée,
- une étape de calcul d'entropie (206) au cours de laquelle l'unité de traitement calcule l'entropie de la matrice de co-occurrence ainsi calculée,
- une étape de calcul de contraste (208) au cours de laquelle l'unité de traitement calcule le contraste de la matrice de co-occurrence ainsi calculée,
- une étape de calcul de moyenne (210) au cours de laquelle l'unité de traitement calcule la moyenne de l'image ainsi capturée,
- une étape de comparaison (212) au cours de laquelle l'unité de traitement compare les caractéristiques ainsi calculées avec des valeurs de référence de ces caractéristiques, et
- une étape de prise de décision (214) au cours de laquelle l'unité de traitement prend une décision concernant la véracité du doigt ou de la paume à partir du résultat de l'étape de comparaison (212).

Fig. 2

**Description**

La présente invention concerne un procédé de vérification de la véracité d'un doigt ou d'une paume, ainsi qu'un dispositif de vérification adapté à mettre en oeuvre un tel procédé de vérification.

Elle trouve application dans le domaine de la reconnaissance biométrique et en particulier dans le domaine de l'identification par analyse des empreintes d'un doigt, de la paume, ou d'un réseau veineux.

Dans le cadre d'une identification/authentification d'une personne par analyse de sa biométrie (empreinte, veine, paume), il est préférable de s'assurer que l'élément porteur de l'empreinte est un vrai doigt et non un leurre présenté dans le but de tromper le système d'identification/authentification.

Il existe de nombreuses solutions permettant de vérifier que l'élément porteur de l'empreinte est véritablement un doigt. On peut citer des solutions logicielles comme celles présentées dans le document intitulé « Wavelet based fingerprint liveness détection » de Y.S. Moon et al (Electron. Lett. Vol 41, No. 20, pp 1112-1113, 2005. On peut également citer des solutions matérielles basées sur des caractéristiques physiques du doigt, comme par exemple l'oxymétrie, la température, etc.

Ces solutions donnent de bons résultats dans la plupart des cas de fraudes, mais les leurres deviennent de plus en plus sophistiqués et dans certains cas, ces nouveaux leurres parviennent à tromper ces systèmes de vérification.

Un objet de la présente invention est de proposer un procédé de vérification de la véracité d'un doigt ou d'une paume qui ne présente pas les inconvénients de l'art antérieur et qui, en particulier, permet d'assurer une meilleure détection d'un leurre.

A cet effet, est proposé un procédé de vérification de la véracité d'un doigt ou d'une paume par un dispositif de vérification comportant un dispositif de capture par tomographie par cohérence optique de face (FF OCT) prévu pour capturer au moins une image d'un plan parallèle à la lame du doigt ou de la paume et une unité de traitement, le procédé comportant:

- une étape de capture au cours de laquelle le dispositif de capture capture une image OCT de face du doigt ou de la paume,
- une étape de calcul de matrice de co-occurrence au cours de laquelle l'unité de traitement calcule la matrice de co-occurrence de l'image ainsi capturée,
- une étape de calcul d'entropie au cours de laquelle l'unité de traitement calcule l'entropie de la matrice de co-occurrence ainsi calculée,
- une étape de calcul de contraste au cours de laquelle l'unité de traitement calcule le contraste de la matrice de co-occurrence ainsi calculée,
- une étape de calcul de moyenne au cours de laquelle l'unité de traitement calcule la moyenne de l'image ainsi capturée,
- une étape de comparaison au cours de laquelle l'unité de traitement compare les caractéristiques ainsi calculées avec des valeurs de référence de ces caractéristiques, et
- une étape de prise de décision au cours de laquelle l'unité de traitement prend une décision concernant la véracité du doigt ou de la paume à partir du résultat de l'étape de comparaison.

Avantageusement, le procédé de vérification comporte en outre au moins une des étapes suivantes précédant les étapes de comparaison et de décision :

- une étape de calcul de densité surfacique au cours de laquelle l'unité de traitement effectue, sur l'image capturée, une segmentation des crêtes de la peau et des pores et calcule la densité surfacique des crêtes de la peau et des pores de l'image capturée,
- une étape de calcul de rapport au cours de laquelle l'unité de traitement calcule le rapport entre le degré d'aplatissement et le degré d'asymétrie de la distribution de niveaux de gris de l'image capturée,
- une étape de calcul de la densité des pixels saturés.

Avantageusement, le procédé de vérification comporte entre l'étape de capture et l'étape de calcul de co-occurrence, une étape de lissage gaussien mise en oeuvre par l'unité de traitement et au cours de laquelle l'image capturée subit un lissage gaussien, et en ce que l'étape de calcul de co-occurrence, l'étape de calcul d'entropie, l'étape de calcul de contraste, l'étape de calcul de moyenne, l'éventuelle étape de calcul de densité surfacique, l'éventuelle étape de calcul du rapport et l'éventuelle étape de calcul de la densité des pixels saturés sont effectuées sur l'image ainsi lissée.

Avantageusement, le procédé comporte une étape de calcul de variance au cours de laquelle l'unité de traitement calcule la variance de l'image ainsi capturée ou lissée.

Avantageusement, le procédé de vérification comporte postérieurement à l'étape de capture, une étape de comparaison de l'image capturée à des images de référence d'une base de données et l'étape de prise de décision prend en compte le résultat de cette étape de comparaison pour décider de la véracité du doigt ou de la paume et de l'identité du porteur du doigt ou de la paume.

Avantageusement, l'étape de capture consiste en:

- une capture d'au moins deux images OCT de face du doigt ou de la paume par le dispositif de capture,
- une mesure de déplacement entre lesdites images entre elles,
- un recalage desdites images entre elles si la mesure de déplacement détecte un déplacement,
- une génération d'une nouvelle image par calcul de la moyenne desdites images.

L'invention propose également un dispositif de vérification de la véracité d'un doigt ou d'une paume, le dispositif de vérification étant destiné à mettre en oeuvre le procédé de vérification selon l'une des variantes précédentes et comportant:

- une lame transparente sur laquelle le doigt ou la paume vient en appui,
- un dispositif de capture prévu pour capturer une image OCT de face d'un plan parallèle à la lame du doigt ou de la paume à travers la lame transparente,
- une unité de traitement comportant:
- des moyens de calcul de matrice de co-occurrence prévus pour calculer la matrice de co-occurrence de l'image capturée,
- des moyens de calcul d'entropie prévus pour calculer l'entropie de la matrice de co-occurrence,
- des moyens de calcul de contraste prévus pour calculer le contraste de la matrice de co-occurrence,
- des moyens de calcul de moyenne prévus pour calculer la moyenne de l'image capturée,
- des moyens de comparaison prévus pour comparer les caractéristiques calculées avec des valeurs de référence de ces caractéristiques, et
- des moyens de prise de décision prévus pour prendre une décision concernant la véracité du doigt ou de la paume (50) à partir du résultat fourni par les moyens de comparaison.

Avantageusement, l'unité de traitement comporte en outre:

- des moyens de calcul de densité surfacique prévus pour effectuer, sur l'image capturée, une segmentation des crêtes de la peau et des pores et calculer la densité surfacique des crêtes de la peau et des pores de l'image capturée, et/ou
- des moyens de calcul de rapport prévus pour calculer le rapport entre le degré d'aplatissement et le degré d'asymétrie de la distribution de niveaux de gris de l'image capturée, et/ou
- des moyens de calcul de la densité des pixels saturés.

Avantageusement, l'unité de traitement comporte en outre des moyens de lissage gaussien prévus pour faire subir à l'image capturée un lissage gaussien, et les moyens de calcul de co-occurrence, les moyens de calcul d'entropie, les moyens de calcul de contraste, les moyens de calcul de moyenne, les éventuels moyens de calcul de densité surfacique, les éventuels moyens de calcul de rapport et les éventuels moyens de calcul de la densité des pixels saturés sont prévus pour traiter l'image lissée par les moyens de lissage gaussien.

Avantageusement, l'unité de traitement comporte des moyens de calcul de variance prévus pour calculer la variance de l'image capturée ou lissée.

Avantageusement, le dispositif de capture est prévu pour capturer au moins deux images OCT de face, l'unité de traitement comporte des moyens de mesure de déplacement entre lesdites images entre elles, des moyens pour recaler lesdites images entre elles et des moyens pour générer un nouvelle image par calcul de la moyenne desdites images.

Avantageusement, la résolution transversale est de 0.8 à 5 microns.

Avantageusement, la profondeur de capture d'image est entre 10 $\mu$m et 100 $\mu$m.

Avantageusement, l'unité de traitement comporte alors des deuxièmes moyens de comparaison prévus pour comparer l'image capturée à des images de référence d'une base de données et les moyens de prise de décision sont prévus pour prendre en outre une décision concernant l'identité du porteur du doigt à partir du résultat fourni par les deuxièmes moyens de comparaison.

Avantageusement, le dispositif de capture comprend un miroir oscillant et un photo-détecteur prévu pour acquérir au moins deux images pendant l'oscillation du miroir, l'unité de traitement comporte des moyens de comparaison prévus pour comparer lesdites images entre elles et pour déterminer l'existence d'un mouvement du doigt ou de la paume entre chaque image, des moyens de recalage prévus pour recaler les images entre elles et des moyens de calcul prévus pour calculer la composante modulée par le déplacement du miroir desdites images.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 représente un dispositif de vérification de la véracité d'un doigt ou d'une paume selon l'invention,
la Fig. 2 représente un algorithme d'un procédé de vérification de la véracité d'un doigt selon l'invention,
la Fig. 3 montre une image d'un doigt véritable,
la Fig. 4 montre une image d'un faux doigt pour un exemple particulier de fraude, et
la Fig. 5 montre un dispositif de capture par tomographie par cohérence optique utilisé dans le cadre de l'invention.

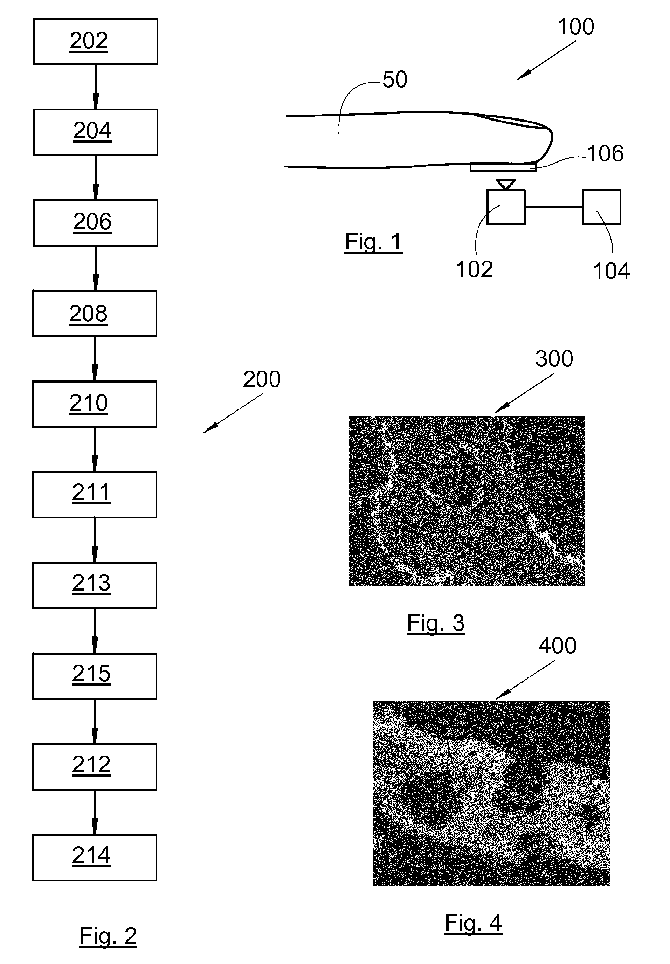

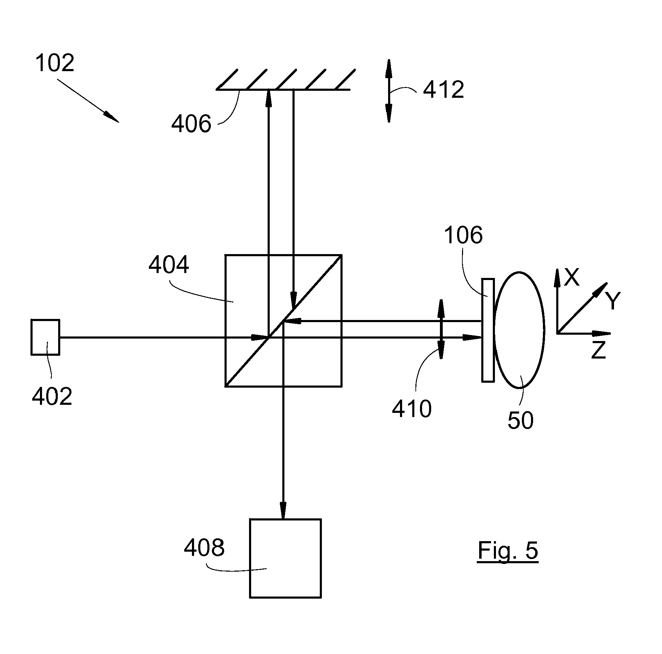

La Fig. 1 montre un dispositif de vérification 100 destiné à vérifier si le doigt 50 est un vrai doigt ou non.
Le dispositif de vérification 100 comporte une lame transparente 106 sur laquelle le doigt 50 vient en appui pour rester stable, un dispositif de capture 102 destiné à capturer une image du doigt 50 à travers la lame transparente 106 et une unité de traitement 104.
Le dispositif de capture 102 comporte des moyens nécessaires à la capture d'une image du doigt 50.
En particulier, le dispositif de capture 102 comporte au moins un moyen de capture comme une caméra.
Le dispositif de capture 102 est un dispositif de capture par tomographie par cohérence optique de face (en Anglais : Full Field Optical Coherence Tomography, FF OCT) prévu pour prendre une image d'un plan parallèle à la lame 106, dont un mode de réalisation est représenté sur la Fig. 5.
Le scan tri- dimensionnel d'un objet obtenu par la technique d'OCT présente l'inconvénient de nécessiter un temps d'acquisition trop important comparativement aux mouvements même sensibles de l'objet dont l'image est acquise (telle que l'image acquise d'un doigt, d'une paume ou d'un réseau veineux). En effet, l'acquisition de l'image pourra être significativement perturbée dans le cas où le doigt bouge même légèrement pendant cette acquisition.
Avantageusement, la technologie OCT de face ou FF OCT ("Full Field OCT" en terminologie Anglo-Saxonne) mise en oeuvre selon l'invention permet avantageusement d'acquérir l'image hautement résolue de l'objet en un temps suffisamment court pour ne pas être gêné par les faibles mouvements du doigt. En effet, la technologie OCT de face ou FF OCT consiste à acquérir une seule série d'images « en face » ou sur un seul plan à très haute résolution (inférieure à 5 micromètre) quand la technologie OCT communément utilisée vise l'acquisition de plusieurs séries d'images de plus basses résolution selon plusieurs plans.
Un tel arrangement apporte un avantage très important en termes d'ergonomie car l'acquisition d'image est rapide et robuste à un très léger déplacement du doigt.
Dans le cas où on cherche à effectuer une reconnaissance du réseau veineux du doigt ou de la paume, on utilisera une variante sans contact de l'OCT de face. Ceci afin de permettre l'acquisition de l'information du réseau veineux et de l'OCT de face simultanément.
La profondeur à laquelle le relevé tomographique est effectué est inférieure à 100 $\mu$m, bien que des profondeurs différentes puissent donner des résultats comparables en termes de performance. Les images capturées sont des images ayant des résolutions inférieure à 5 $\mu$m, et l'utilisation du dispositif de capture 102 par OCT de face permet de capturer les structures de cellules cutanées, et même sous cutanées et c'est la texture de ces structures de hautes fréquences spatiales qui sont étudiées et caractérisées pour valider le doigt 50.
Dans le cas d'un dispositif de capture OCT de face, le moyen de capture est un photo-détecteur. Dans le cas particulier de l'OCT de face, il se présentera sous la forme d'une caméra.
En particulier, l'utilisation d'un dispositif de capture OCT de face permet d'obtenir une image de l'intérieur du doigt 50 dans laquelle les cellules sont imagées en coupe et donc d'améliorer la fiabilité de la vérification réalisée par le dispositif de vérification 100 puisque la structure interne d'un doigt est différente de la structure interne d'un leurre qui n'est pas vivant et ne présente pas de cellules.
La Fig. 5 montre un exemple de dispositif de capture OCT de face 102 qui est basé sur un interféromètre de Michelson et qui comporte ici:

- une source de lumière 402,
- un séparateur de faisceau 404 avec une lame séparatrice,
- un miroir de référence 406, et
- un photo-détecteur 408.

La double flèche 410 représente la direction transversale de scan parallèle à l'axe x.
La double flèche 412 représente la direction axiale de scan en profondeur parallèle à l'axe z.
La source de lumière 402 présente une faible longueur de cohérence donnée par la formule:

$$L_c = \frac{2.\ln(2)}{\pi} * \frac{\lambda_c^2}{\Delta\lambda}$$, où $\lambda_c$ est la longueur d'onde centrale de la source de lumière 402 et où $\Delta\lambda$, représente la largeur spectrale de la source de lumière 402.

Le phénomène d'interférence entre le faisceau lumineux venant du miroir de référence 406 et le faisceau lumineux venant du doigt 50 apparaît si la différence de chemin optique de la lumière est inférieure à $L_c$.

Le miroir de référence 406 se déplace pour permettre le balayage du doigt 50 selon l'axe de profondeur z également appelé scan-A et un ensemble de scan-A est appelé scan-B.

La résolution axiale ($\delta z$ sur l'axe z) est liée à $L_c$ par la formule $\delta z = \frac{L_c}{n}$ où 'n' est l'indice de réfraction optique du doigt 50.

Ainsi, pour réduire la résolution axiale, une source de lumière 402 à large bande proche de la diffusion gaussienne à large bande passante est utilisée. Par exemple, avec un laser Ti ($\lambda_c$ = 810$nm$, $\Delta\lambda$, = 260$nm$ ), la résolution axiale est de 1,5 microns.

La profondeur de scan est limitée par la pénétration de longueurs d'ondes et les dispersions multiples dans le doigt 50 et par l'ouverture numérique (en anglais: Numerical Aperture NA) du système optique qui capture la lumière réfléchie ou diffusée par le doigt 50. L'absorption et les phénomènes de diffusion de la lumière dans le doigt 50 font chuter la profondeur de pénétration.

Il faut choisir la source de lumière 402 de manière à permettre une bonne caractérisation de la structure interne du doigt 50.

L'ouverture numérique joue un rôle dans la profondeur de champ du système optique qui capture la lumière réfléchie ou diffusée par le doigt 50, et il faut une ouverture numérique petite pour que la profondeur de champ soit élevée, et donc une grande profondeur de scan. En général, la profondeur de scan en OCT de face est de quelques millimètres.

Le scan transversal appelé le scan-C est réalisé en utilisant le faisceau illuminant le doigt 50, ou en déplaçant le doigt 50. Grâce au scan transversal, la surface du doigt 50 est parcourue. Un ensemble de scan-C est appelé scan-T. La résolution transversale ($\delta x, \delta y$) est exprimée par $\delta x = \delta y = 0,61 \frac{\lambda_c}{NA}$.

Ainsi, la résolution transversale diminue lorsque NA augmente, tandis que la profondeur de champ du système optique est faible, et de là une profondeur de scan faible.

En général, des réglages optiques sont réalisés pour obtenir des résolutions axiale et transversale modérées et approximativement égales à 10 microns.

En technologie OCT de face, la résolution et la profondeur de pénétration dans le doigt 50 varient respectivement de 1 micron à 15 microns et de 1 mm à 3 mm. Ainsi, la technologie OCT de face est adaptée à l'analyse des tissus de la peau de quelques millimètres d'épaisseur. Cette profondeur de pénétration est suffisante pour capturer des images OCT de face révélant les structures internes du doigt 50.

La technologie d'OCT de face, FF OCT apporte quelques évolutions à cette disposition. En effet, le photo-détecteur est remplacé par une caméra, la source laser est remplacée par une source étendue (comme une lampe halogène filtrée ou une LED) et deux objectifs identiques sont utilisés dans les deux voies. Le miroir doit avoir une surface supérieure à la surface imagée du doigt 50.

Grâce à la technologie FF OCT, tous les pixels du dispositif de capture 102 acquièrent simultanément la lumière provenant de la surface du doigt 50 éclairée. Le balayage transversal de la source n'est plus nécessaire pour obtenir une image bidimensionnelle du doigt 50.

L'image est alors obtenue beaucoup plus rapidement et la capture d'une image peut être limitée à la capture d'une image à une profondeur donnée au-delà de la lame 106 contre laquelle le doigt 50 est maintenu en contact. Le déplacement du miroir 406 peut être alors une simple oscillation d'amplitude inférieure à 1 $\mu$m correspondant à la longueur d'onde centrale utilisée pour l'éclairage. Cet arrangement permet de ne plus avoir besoin d'une grande profondeur de champ optique et donc permet d'utiliser des objectifs avec des ouvertures numériques plus grandes et de réduire la résolution transversale en dessous de 1 $\mu$m.

Une telle solution est décrite dans:

le document intitulé: "Ultrahigh-resolution full-field optical coherence tomography" des auteurs: Arnaud Dubois, Kate Grieve, Gael Moneron, Romain Lecaque, Laurent Vabre, et Claude Boccara; et publié sous les références: APPLIED OPTICS_ Vol. 43, No. 14_ 10 May 2004, p 2874 à 2883, et dans
le document intitulé: "Large Field, High Resolution Full-Field Optical Coherence Tomography: A Pre-clinical Study of Human Breast Tissue and Cancer Assessment", des auteurs Assayag, O., Antoine, M., Sigal-Zafrani, B., Riben, M., Harms, F., Burcheri, A., Grieve, K., Dalimier, E., Le Conte de Poly, B., Boccara, C.; et publiée sous les références Technol Cancer Res Treat 13, 455-468 (2014) DOI: 10.7785/tcrtexpress.2013.600254.

En effet, la durée d'acquisition d'une image OCT de face peut être réduite en dessous de 0,1 seconde.

Selon un mode de réalisation particulier de l'invention, le dispositif de capture OCT de face 102 comporte:

- une source de lumière du type lampe halogène blanche, ou du type DEL avec une largeur spectrale comprise entre 30 et 250 nm dont la longueur de cohérence est comprise entre environ 1 et 7 microns. La longueur d'onde centrale est choisie entre le vert (500 nm) pour favoriser la résolution au détriment du flux réfléchi par le doigt 50 lorsque la profondeur de capture d'image est faible, et le proche infrarouge (1μm) pour favoriser la profondeur de pénétration et le flux au détriment de la résolution.
- la résolution axiale est de l'ordre de 1 à 7 microns,
- la résolution transversale est définie par la performance de l'optique et la résolution du dispositif de capture 102, et elle est de 0.8 à 5 microns, afin que les cellules du doigt 50 soient bien visibles. De préférence, la résolution axiale et la résolution transversale seront choisies du même ordre de grandeur.
- la profondeur de capture d'image, dite profondeur de scan est entre 10 μm et 100 μm pour être inférieure à la profondeur des sillons du doigt 50 ce qui permet de capturer la forme des sillons et inférieure à la profondeur d'une fraude réalisée sous la forme d'une couche mince.
- la surface d'acquisition est supérieure à 1 mm$^2$, de préférence supérieure à 15 mm$^2$ pour permettre simultanément l'identification de l'individu,
- les oscillations du miroir de référence sont réalisées par des moteurs micrométriques, ou piezo, ce miroir décrit un mouvement périodique synchronisé avec le dispositif de capture 102 tel que le dispositif de capture 102 acquiert au moins 3 images par période. Par exemple, la caméra peut acquérir 4 images par période et le miroir a une surface au moins égale au champ imagé.
- le moyen de capture est une caméra CCD ou CMOS résolue (plus de 1 megapixel) et rapide (plus de 60 fps), par exemple 2048 pixels x 2048 pixels et dont le nombre d'images par seconde est 200 fps.

Des moyens appropriés peuvent être prévus pour réaliser l'acquisition d'un ensemble d'images correspondant à un nombre entier de période d'oscillation du miroir 406 puis l'extraction de la composante modulée par le déplacement du miroir 406 de cet ensemble d'images. L'acquisition de plus d'une période d'oscillation du miroir 406 permet de réduire le bruit par moyennage des images entre elles. Par exemple, il est possible d'acquérir 4 images par période pendant 4 périodes, soit un total de 16 images.

Avantageusement, l'extraction de la composante modulée de l'ensemble des images pourra être précédée d'une étape de recalage des images entre elles rendue possible par le contraste présent dans l'image des empreintes. Le système sera ainsi rendu beaucoup moins sensible aux petits déplacements du doigt.

Une autre solution consiste à extraire la composante modulée pour chaque période du miroir, et ensuite recaler entre elles les images extraites avant d'en calculer la moyenne pour produire l'image OCT de face. Le dispositif de capture 102 comprend alors le miroir 406 oscillant et le photo-détecteur 402 prévu pour acquérir au moins deux images pendant l'oscillation du miroir 406, l'unité de traitement 104 comporte alors des moyens de comparaison prévus pour comparer lesdites images entre elles et pour déterminer l'existence d'un mouvement du doigt ou de la paume 50 entre chaque image, des moyens de recalage prévus pour recaler les images entre elles et des moyens de calcul prévus pour calculer la composante modulée par le déplacement du miroir desdites images.

Le système utilisera préférentiellement deux objectifs identiques placés l'un entre la lame séparatrice et le doigt 50 et l'autre entre la lame séparatrice et le miroir de référence 406.

Tout autre système de réalisation d'OCT de face permettant l'acquisition rapide d'une image « en face » du doigt située à une profondeur choisie et avec des résolutions comprises entre 0.8 et 10 microns dans les différents axes peut convenir. Cela inclut en particulier des dispositifs FF OCT qui utiliseraient une caméra adaptée pour réaliser la démodulation au niveau du pixel comme cela est utilisé pour certaines caméras temps de vol (par exemple celles de la société PMDTechnologies GmbH).

Si le champ imagé est trop petit pour l'application, un système permettant le déplacement du champ imagé permettra l'acquisition de plusieurs images couvrant dans leur ensemble un champ étendu. Ces images seront ensuite rassemblées (stitching ou mosaicing en anglais) pour générer une seule image en prenant en compte l'éventualité d'un petit mouvement du doigt ou de la paume 50. Ce système peut être réalisé par la translation d'une partie du dispositif ou par l'ajout d'un miroir mobile. Les champs auront un recouvrement et le logiciel par corrélation les rassemblera de manière cohérente.

La vitesse du dispositif de capture 102 est choisie en fonction du nombre d'images pour chaque acquisition d'OCT de face (16 par exemple) et du temps que l'on peut consacrer à ces acquisitions pour des raisons d'ergonomie (par exemple 0.1 seconde), la vitesse minimale est ainsi de l'ordre 160 images par secondes.

Si pour une résolution transversale de 5 microns et que le dispositif de capture 102 compte 2000 pixels x 2000 pixels, le champ imagé est alors de 10x10 mm², ce qui peut être suffisant pour l'application. Si la résolution transversale est choisie inférieure à 1μm (par exemple 0.8), alors le champ imagé par le même dispositif de capture 102 est réduit à 1,6 x 1,6 mm ce qui sera en général insuffisant. On a alors par exemple recours à l'acquisition de 4x4 images pour atteindre un champ voisin de 6x6 mm².

On peut réaliser une image à plusieurs profondeurs. Par exemple, une image à 20 μm, une image à 50 μm et une image à 100 μm sous la lame. Cela peut permettre de collecter d'avantage d'informations et aider à identifier des doigts 50 difficiles.

La détection de fraude peut alors se faire de façon identique sur les trois images, puisque les structures de cellules ne diffèrent pas significativement pour ces profondeurs.

Si plusieurs profondeurs doivent être acquises, cela peut se faire par un déplacement du miroir de référence 406 si la profondeur de champ est suffisante, ou par un déplacement de la lame 106 en contact avec le doigt 50 par rapport au reste du dispositif.

La Fig. 3 montre une image 300 d'un vrai doigt 50 capturée par un dispositif de capture OCT de face 102 à une profondeur de 20 microns et sur laquelle sont visibles en particulier les frontières du doigt 50 et un pore ouvert. Les frontières du doigt 50 et les bords du pore sont matérialisés par des lignes blanches tandis que l'intérieur reste globalement uniforme et gris.

La Fig. 4 montre une image 400 d'un exemple de fraude où un faux doigt 50 est réalisé en silicone blanc. Dans ce cas, il n'y a pas de véritables différences entre les frontières et l'intérieur qui restent ici tous les deux globalement blancs.

A partir de l'image capturée par le dispositif de capture 102, différentes caractéristiques relatives au doigt 50 sont calculées puis analysées par l'unité de traitement 104, ce qui permet d'en déduire que le doigt 50 est un vrai doigt ou un faux doigt.

Les caractéristiques primordiales qui ont été identifiées sont l'entropie, le contraste et la moyenne. L'utilisation de ces trois critères permet de filtrer la majorité de fraudes sans se tromper sur les vrais doigts.

De manière générale, l'entropie d'une image est représentative du désordre de la structure visible sur l'image, et le contraste est représentatif de la différence de niveau de gris (également appelé: intensité) entre un pixel et ses voisins. L'entropie et le contraste sont calculés à partir de la matrice de co-occurrence d'une taille de 255x255 dont une méthode de calcul est donnée sur le site http://en.wikipedia.org/wiki/Co-occurrence_matrix.

Les éléments de la matrice de co-occurrence sont notés $P_\theta^T(i,j)$ et dénotent une probabilité de transition d'un niveau de gris i d'un pixel originel, vers un niveau de gris j d'un pixel voisin situé à une distance de T du pixel originel dans la direction θ.

Dans le cadre de l'invention, l'angle θ=0° a été préféré, mais d'autres angles comme par exemple 45°, 90° ou 135° peuvent également être utilisés.

De la même manière, dans le cadre de l'invention, T a été choisi égal à 15, car cela donne de bons résultats.

L'entropie de la matrice de cooccurrence est donnée par la formule:

$$E = -\sum_{i,j} P_\theta^T(i,j).\log(P_\theta^T(i,j)) \qquad (1).$$

Le contraste de la matrice de cooccurrence est donné par la formule:

$$C = \sum_{i,j} (i-j)^2 P_\theta^T(i,j) \qquad (2).$$

Dans les formules (1) et (2) i et j sont les indices de la matrice de co-occurrence et varient de 0 à 255.

La moyenne de l'image est donnée par la formule:

$$M = \frac{\sum_{k=1}^{W}\sum_{l=1}^{H} I(k,l)}{W.H} \qquad (3)$$

où W est la largeur de l'image, H est la hauteur de l'image, *I(k,l)* est le niveau de gris du pixel de position (k, *l*).

Après calcul de ces caractéristiques, l'unité de traitement 104 compare les valeurs de ces caractéristiques (entropie, contraste, moyenne) avec des valeurs de référence de ces caractéristiques, et en fonction de ces comparaisons, l'unité de traitement 104 en déduit que le doigt 50 est un vrai ou un faux doigt.

Selon un mode particulier de l'invention, un doigt 50 est considéré comme vrai lorsque l'entropie est comprise entre 6,8 et 9, le contraste est compris entre 300 et 680, et la moyenne est comprise entre 60 et 115.

La comparaison peut être une comparaison par rapport à un seuil, c'est-à-dire que chaque caractéristique est comparée à un seuil et selon sa position par rapport au seuil, l'unité de traitement 104 en déduit que la caractéristique est représentative d'un vrai ou d'un faux doigt. L'analyse des trois caractéristiques simultanément permet d'assurer de bons résultats.

La comparaison peut être basée sur d'autres méthodes comme par exemple, l'analyse discriminante linéaire (en anglais: Linear Discriminant Analysis, LNA), la mise en oeuvre de machines à vecteurs de support (en anglais: Support Vector Machine, SVM), ...

La Fig. 2 montre un algorithme d'un procédé de vérification 200 de la validité d'un doigt 50 mis en oeuvre par le dispositif de vérification 100.

Le procédé de vérification 200 comporte:

- une étape de capture 202 au cours de laquelle le dispositif de capture 102 capture une image OCT de face du doigt 50,
- une étape de calcul de matrice de co-occurrence 204 au cours de laquelle l'unité de traitement 104 calcule la matrice de co-occurrence $\left[ P_\theta^T(i,j) \right]$ de l'image ainsi capturée,
- une étape de calcul d'entropie 206 au cours de laquelle l'unité de traitement 104 calcule l'entropie de la matrice de co-occurrence ainsi calculée en particulier selon la formule (1): $E = -\sum_{i,j} P_\theta^T(i,j).\log(P_\theta^T(i,j))$ où i et j sont les indices de la matrice de co-occurrence,
- une étape de calcul de contraste 208 au cours de laquelle l'unité de traitement 104 calcule le contraste de la matrice de co-occurrence ainsi calculée en particulier selon la formule (2): $C = \sum_{i,j}(i-j)^2 P_\theta^T(i,j)$ où i et j sont les indices de la matrice de co-occurrence,
- une étape de calcul de moyenne 210 au cours de laquelle l'unité de traitement 104 calcule la moyenne de l'image ainsi capturée en particulier selon la formule (3): $WH$ $M = \dfrac{\sum_{k=1}^{W}\sum_{l=1}^{H} I(k,l)}{W.H}$, où W est la largeur de l'image, H est la hauteur de l'image, $I(k,l)$ est le niveau de gris du pixel de position $(k, l)$,
- une étape de comparaison 212 au cours de laquelle l'unité de traitement 104 compare les caractéristiques ainsi calculées avec des valeurs de référence de ces caractéristiques, et
- une étape de prise de décision 214 au cours de laquelle l'unité de traitement 104 prend une décision concernant la véracité du doigt 50 à partir du résultat de l'étape de comparaison 212.

Selon des modes de réalisation alternatifs, le procédé de vérification 200 comporte au moins l'une des étapes suivantes préalablement à l'étape de comparaison 212 et l'étape de comparaison prend alors en compte les résultats de ces étapes et compare les caractéristiques calculées lors de ces étapes avec des valeurs de référence de ces caractéristiques. Les étapes sont:

- une étape de calcul de densité surfacique 211 au cours de laquelle l'unité de traitement 104 effectue, sur l'image capturée, une segmentation des crêtes de la peau et des pores et calcule la densité surfacique des crêtes de la peau et des pores de l'image capturée,
- une étape de calcul de rapport 213 au cours de laquelle l'unité de traitement 104 calcule le rapport entre le degré d'aplatissement (appelé « kurtosis » en anglais) et le degré d'asymétrie (appelé « skewness » en anglais) de la distribution de niveaux de gris de l'image capturée,
- une étape de calcul de la densité de pixels saturés (215) en particulier selon la formule (9) explicitée ci-dessous.

Lors de l'étape de calcul de densité surfacique 211, l'unité de traitement 104 effectue, sur l'image capturée, une segmentation des ridges (crêtes de la peau) et des pores fermés (de niveaux de gris plus élevés que les pixels de fond), par exemple, par seuillage d'histogramme en niveau de gris, puis un nettoyage du masque binaire en appliquant une ouverture morphologique (comme décrit sur le lien https://en.wikipedia.org/wiki/Mathematical_morphology), et enfin un calcul de la densité surfacique des ridges et des pores de l'image ainsi traitée et nettoyée en particulier selon la formule:

$$d = \frac{\sum_{k=1}^{W}\sum_{l=1}^{H}\bigl(S(k,l)\bigr)}{W.H} \qquad (6),$$

où W est la largeur de l'image, H est la hauteur de l'image, et où S(k,l) est le résultat de segmentation des ridges et des pores obtenue après le nettoyage par ouverture morphologique.

Le seuillage s'effectue par exemple par un traitement selon la méthode d'Otsu qui est décrit sur le site http://en.wikipedia.org/wiki/Otsu's_method.

Lors de l'étape de calcul de rapport 213, l'unité de traitement 104 calcule le Skewness qui est le degré d'asymétrie de la distribution de niveaux de gris de l'image capturée et le Kurtosis qui est le degré d'aplatissement de la distribution de niveaux de gris de l'image capturée, puis le rapport entre le Skewness (5) et le Kurtosis (4) de l'image ainsi capturée.

Le Kurtosis de l'image ainsi capturée est donné en particulier par la formule:

$$K = \frac{\sum_{k=1}^{W}\sum_{l=1}^{H}\bigl(I(k,l)-M\bigr)^{4}}{(W.H-1).\sigma^{4}} \qquad (4)$$

où W est la largeur de l'image, H est la hauteur de l'image, $I(k,l)$ est le niveau de gris du pixel de position (k, $l$), $\sigma$ est l'écart type de l'image, c'est-à-dire la racine carrée de la variance définie par la formule: $V = \dfrac{\sum_{k=1}^{W}\sum_{l=1}^{H}\bigl(I(k,l)-M\bigr)^{2}}{W.H-1}$,

et M la moyenne de l'image.

Le Skewness de l'image ainsi capturée est donné en particulier par la formule:

$$S = \frac{\sum_{k=1}^{W}\sum_{l=1}^{H}\bigl(I(k,l)-M\bigr)^{3}}{(W.H-1).\sigma^{3}} \qquad (5)$$

où W est la largeur de l'image, H est la hauteur de l'image, $I(k,l)$ est le niveau de gris du pixel de position (k, $l$), $\sigma$ est l'écart type de l'image, c'est-à-dire la racine carrée de la variance définie par la formule: $V = \dfrac{\sum_{k=1}^{W}\sum_{l=1}^{H}\bigl(I(k,l)-M\bigr)^{2}}{W.H-1}$,

et M la moyenne de l'image.

Un pixel est dit saturé, si son niveau de gris est supérieur à un seuil qui selon un mode de réalisation particulier est égal à 200 et la densité des pixels saturés est donnée par la formule:

$$d^{sat} = \frac{\sum_{k=1}^{W}\sum_{l=1}^{H} 1\bigl(I(k,l) > seuil\bigr)}{W.H}, \qquad (9)$$

où $1(I(k,l) > seuil)$ = 1 si I(k,l)>seuil, et $1(I(k,l) > seuil)$ = 0 si I(k,l)<seuil.

Le rapport entre le Skewness (5) et le Kurtosis (4) de l'image ainsi capturée est donné en particulier par la formule:

$$R = \frac{S}{K} = \frac{\sum_{k=1}^{W}\sum_{l=1}^{H}\left(I(k,l)-M\right)^3 . \sigma}{\sum_{k=1}^{W}\sum_{l=1}^{H}\left(I(k,l)-M\right)^4} \qquad (7),$$

où W est la largeur de l'image, H est la hauteur de l'image, $I(k,l)$ est le niveau de gris du pixel de position (k, l), σ est l'écart type de l'image, c'est-à-dire la racine carrée de la variance définie par la formule: $V = \dfrac{\sum_{k=1}^{W}\sum_{l=1}^{H}\left(I(k,l)-M\right)^2}{W.H-1}$ ,

et M la moyenne de l'image.

Pour limiter l'impact du bruit de l'image sur les résultats des vérifications, une étape de lissage gaussien est mise en oeuvre par l'unité de traitement 104 entre l'étape de capture 202 et l'étape de calcul de co-occurrence 204.

Selon un mode de réalisation particulier de l'invention, le lissage gaussien est effectué avec un noyau de taille 15x15 pixels et l'écart type de la gaussienne vaut 3 pour éviter de casser la structure des cellules qu'on cherche à caractériser tout en atténuant le bruit.

L'étape de lissage gaussien consiste à faire subir à l'image capturée un lissage gaussien.

L'étape de calcul de co-occurrence 204, l'étape de calcul d'entropie 206, l'étape de calcul de contraste 208, l'étape de calcul de moyenne 210, l'éventuelle étape de calcul de densité surfacique 211, l'éventuelle étape de calcul du rapport 213 et l'éventuelle étape de calcul de la densité des pixels saturés sont alors effectuées sur l'image ainsi lissée.

Le système peut être rendu robuste aux mouvements du doigt 50. L'étape de capture 202 consiste alors en:

- une capture d'au moins deux images OCT de face du doigt ou de la paume 50 par le dispositif de capture 102,
- une mesure de déplacement entre lesdites images entre elles,
- un recalage desdites images entre elles si la mesure de déplacement détecte un déplacement,
- une génération d'une nouvelle image par calcul de la moyenne desdites images.

Cette nouvelle image est alors utilisée dans la suite du procédé de vérification 200 et est une image présentant moins de bruit du fait que la moyenne est effectuée sur des images recalées et non plus décalées. Le procédé de vérification 200 n'est alors plus pénalisé par un déplacement du doigt ou de la paume 50.

La mesure de déplacement est réalisée par l'unité de traitement 104 qui compare les au moins deux images OCT de face successivement acquises et détermine si un éventuel déplacement du doigt 50 a eu lieu entre ces deux images et en cas de déplacement, l'unité de traitement 104 peut alors recaler les images entre elles, soit rejeter la vérification et recommencer.

Cette dernière caractéristique ne peut pas être réalisée avec un système d'OCT de face avec un système à balayage car le mouvement du doigt résultera en des distorsions importantes de l'image finale.

A cette fin, le dispositif de capture 102 est prévu pour capturer au moins deux images OCT de face, l'unité de traitement 104 comporte des moyens de mesure de déplacement entre lesdites images entre elles, des moyens pour recaler lesdites images entre elles et des moyens pour générer une nouvelle image par calcul de la moyenne desdites images.

L'image capturée à faible profondeur (entre 20 et 100 μm) par le dispositif de capture 102 constitue une image où les sillons du doigt 50 apparaissent. Cette image peut être comparée à des images de référence d'une base de données, ce qui permet d'assurer une meilleure robustesse du procédé puisque l'image servant à l'identification (sillons) est identique à l'image servant au contrôle des fraudes. Cette extraction pourra se faire par un simple seuillage suivi d'une remise à l'échelle de 500 dpi ou de 1000 dpi habituelle dans le domaine de l'empreinte digitale. Ceci est possible car le champ imagé peut être grand dans cette configuration d'OCT de face.

Le procédé de vérification 200 comporte alors, postérieurement à l'étape de capture 202, une étape de comparaison de l'image des sillons capturée au cours de l'étape de capture 202 à des images de référence d'une base de données et l'étape de prise de décision 214 prend en compte le résultat de cette étape de comparaison pour décider de la véracité du doigt 50 et de l'identité du porteur du doigt 50.

L'unité de traitement 104 comporte alors des deuxièmes moyens de comparaison prévus pour comparer l'image capturée à des images de référence de la base de données et les moyens de prise de décision sont prévus pour prendre une décision concernant la véracité du doigt ou de la paume 50 à partir du résultat fourni par les moyens de comparaison et concernant l'identité du porteur du doigt 50 à partir du résultat fourni par les deuxièmes moyens de comparaison.

Pour améliorer les résultats des vérifications, le procédé de vérification 200 comporte, avant l'étape de comparaison 212, une étape de calcul de variance au cours de laquelle l'unité de traitement 104 calcule la variance de l'image ainsi capturée ou lissée en particulier selon la formule:

$$V = \frac{\sum_{k=1}^{W} \sum_{l=1}^{H} \left( I(k,l) - M \right)^2}{W.H - 1} \qquad (8)$$

où W est la largeur de l'image, H est la hauteur de l'image, $I(k,l)$ est le niveau de gris du pixel de position (k, $l$), et M la moyenne de l'image.

L'étape de comparaison 212 et l'étape de prise de décision 214 prendront aussi alors en compte cette caractéristique, la variance ainsi calculée, pour évaluer la véracité du doigt 50.

L'unité de traitement 104 comporte plus particulièrement:

- des moyens de calcul de la matrice de co-occurrence prévus pour calculer la matrice de co-occurrence $\left[ P_\theta^T(i,j) \right]$ de l'image capturée,

- des moyens de calcul d'entropie prévus pour calculer l'entropie de la matrice de co-occurrence selon la formule
$E = -\sum_{i,j} P_\theta^T(i,j).\log(P_\theta^T(i,j))$ (1) où i et j sont les indices de la matrice de co-occurrence,

- des moyens de calcul de contraste prévus pour calculer le contraste de la matrice de co-occurrence selon la formule
$C = \sum_{i,j} (i-j)^2 P_\theta^T(i,j)$ (2) où i et j sont les indices de la matrice de co-occurrence,

- des moyens de calcul de moyenne prévus pour calculer la moyenne de l'image capturée selon la formule
$M = \frac{\sum_{k=1}^{W} \sum_{l=1}^{H} I(k,l)}{W.H}$ (3), où W est la largeur de l'image, H est la hauteur de l'image, $I(k, l)$ est le niveau de gris du pixel de position (k, l),

- des moyens de comparaison prévus pour comparer les caractéristiques calculées avec des valeurs de référence de ces caractéristiques, et

- des moyens de prise de décision prévus pour prendre une décision concernant la véracité du doigt 50 à partir du résultat fourni par les moyens de comparaison.

Selon le procédé de vérification 200 mis en oeuvre, l'unité de traitement 104 comporte en outre:

- des moyens de calcul de densité surfacique prévus pour effectuer, sur l'image capturée, une segmentation des crêtes de la peau et des pores et pour calculer la densité surfacique des crêtes de la peau et des pores de l'image capturée, et/ou

- des moyens de calcul de rapport prévus pour calculer le rapport entre le degré d'aplatissement et le degré d'asymétrie de la distribution de niveaux de gris de l'image capturée, et/ou

- des moyens de calcul de la densité des pixels saturés.

Les moyens de comparaison sont alors prévus pour prendre en compte les caractéristiques calculées par ces moyens lors des comparaisons avec des valeurs de référence de ces caractéristiques.

Les moyens de calcul de densité surfacique sont par exemple prévus pour effectuer une segmentation des crêtes de la peau et des pores par seuillage d'histogramme en niveau de gris, puis un nettoyage du masque binaire en appliquant une ouverture morphologique et les moyens de calcul de densité surfacique sont prévus pour calculer la densité surfacique des ridges et des pores de l'image ainsi traitée et nettoyée selon la formule:

$$d = \frac{\sum_{k=1}^{W} \sum_{l=1}^{H} \left( S(k,l) \right)}{W.H} \qquad (6).$$

Les moyens de calcul de rapport comportent des moyens de calcul de Kurtosis prévus pour calculer le Kurtosis de l'image capturée selon la formule:

$$K = \frac{\sum_{k=1}^{W}\sum_{l=1}^{H}\left(I(k,l)-M\right)^4}{(W.H-1).\sigma^4} \qquad (4).$$

Les moyens de calcul de rapport comportent des moyens de calcul de Skewness prévus pour calculer le Skewness de l'image capturée selon la formule:

$$S = \frac{\sum_{k=1}^{W}\sum_{l=1}^{H}\left(I(k,l)-M\right)^3}{(W.H-1).\sigma^3} \qquad (5).$$

Les moyens de calcul de rapport comportent des moyens de calcul prévus pour calculer le rapport entre le Skewness et le Kurtosis de l'image capturée selon la formule:

$$\text{formule: } R = \frac{S}{K} = \frac{\sum_{k=1}^{W}\sum_{l=1}^{H}\left(I(k,l)-M\right)^3.\sigma}{\sum_{k=1}^{W}\sum_{l=1}^{H}\left(I(k,l)-M\right)^4} \qquad (7).$$

Lorsque le procédé de vérification 200 comporte une étape de lissage gaussien, l'unité de traitement 104 comporte des moyens de lissage gaussien prévus pour faire subir à l'image capturée un lissage gaussien, et les moyens de calcul de co-occurrence, les moyens de calcul d'entropie, les moyens de calcul de contraste, les moyens de calcul de moyenne, les éventuels moyens de calcul de densité surfacique, les éventuels moyens de calcul de rapport et les éventuels moyens de calcul de la densité des pixels saturés sont prévus pour traiter l'image lissée par les moyens de lissage gaussien.

Lorsque le procédé de vérification 200 comporte une étape de calcul de variance, l'unité de traitement 104 comporte des moyens de calcul de variance prévus pour calculer la variance de l'image capturée ou lissée selon la formule:

$$V = \frac{\sum_{k=1}^{W}\sum_{l=1}^{H}\left(I(k,l)-M\right)^2}{W.H-1} \qquad (8).$$

Bien entendu, la présente invention n'est pas limitée aux exemples et modes de réalisation décrits et représentés, mais elle est susceptible de nombreuses variantes accessibles à l'homme de l'art.

**Revendications**

1. Procédé de vérification (200) de la véracité d'un doigt ou d'une paume (50) par un dispositif de vérification (100) comportant un dispositif de capture (102) par tomographie par cohérence optique de face (FF OCT) prévu pour capturer au moins une image d'un plan parallèle à la lame (106) du doigt ou de la paume (50) et une unité de traitement (104), le procédé comportant:

   - une étape de capture (202) au cours de laquelle le dispositif de capture (102) capture une image OCT de face du doigt ou de la paume (50),

- une étape de calcul de matrice de co-occurrence (204) au cours de laquelle l'unité de traitement (104) calcule la matrice de co-occurrence de l'image ainsi capturée,
- une étape de calcul d'entropie (206) au cours de laquelle l'unité de traitement (104) calcule l'entropie de la matrice de co-occurrence ainsi calculée,
- une étape de calcul de contraste (208) au cours de laquelle l'unité de traitement (104) calcule le contraste de la matrice de co-occurrence ainsi calculée,
- une étape de calcul de moyenne (210) au cours de laquelle l'unité de traitement (104) calcule la moyenne de l'image ainsi capturée,
- une étape de comparaison (212) au cours de laquelle l'unité de traitement (104) compare les caractéristiques ainsi calculées avec des valeurs de référence de ces caractéristiques, et
- une étape de prise de décision (214) au cours de laquelle l'unité de traitement (104) prend une décision concernant la véracité du doigt ou de la paume (50) à partir du résultat de l'étape de comparaison (212).

2. Procédé de vérification (200) selon la revendication 1, **caractérisé en ce qu'**il comporte en outre au moins une des étapes suivantes précédant les étapes de comparaison et de décision :

- une étape de calcul de densité surfacique (211) au cours de laquelle l'unité de traitement (104) effectue, sur l'image capturée, une segmentation des crêtes de la peau et des pores et calcule la densité surfacique des crêtes de la peau et des pores de l'image capturée,
- une étape de calcul de rapport (213) au cours de laquelle l'unité de traitement (104) calcule le rapport entre le degré d'aplatissement et le degré d'asymétrie de la distribution de niveaux de gris de l'image capturée,
- une étape de calcul de la densité des pixels saturés (215).

3. Procédé de vérification (200) selon l'une des revendications 1 ou 2, **caractérisé en ce qu'**il comporte entre l'étape de capture (202) et l'étape de calcul de co-occurrence (204), une étape de lissage gaussien mise en oeuvre par l'unité de traitement (104) et au cours de laquelle l'image capturée subit un lissage gaussien, et **en ce que** l'étape de calcul de co-occurrence (204), l'étape de calcul d'entropie (206), l'étape de calcul de contraste (208), l'étape de calcul de moyenne (210), l'éventuelle étape de calcul de densité surfacique (211), l'éventuelle étape de calcul du rapport (213) et l'éventuelle étape de calcul de la densité des pixels saturés sont effectuées sur l'image ainsi lissée.

4. Procédé de vérification (200) selon l'une des revendications 1 à 3, **caractérisé en ce qu'**il comporte une étape de calcul de variance au cours de laquelle l'unité de traitement (104) calcule la variance de l'image ainsi capturée ou lissée.

5. Procédé de vérification (200) selon l'une des revendications 1 à 4, **caractérisé en ce qu'**il comporte postérieurement à l'étape de capture (202), une étape de comparaison de l'image capturée à des images de référence d'une base de données et l'étape de prise de décision (214) prend en compte le résultat de cette étape de comparaison pour décider de la véracité du doigt ou de la paume (50) et de l'identité du porteur du doigt (50) ou de la paume.

6. Procédé de vérification (200) selon l'une des revendications précédentes, **caractérisé en ce que** l'étape de capture (202) consiste en:

- une capture d'au moins deux images OCT de face du doigt ou de la paume (50) par le dispositif de capture (102),
- une mesure de déplacement entre lesdites images entre elles,
- un recalage desdites images entre elles si la mesure de déplacement détecte un déplacement,
- une génération d'une nouvelle image par calcul de la moyenne desdites images.

7. Dispositif de vérification (100) de la véracité d'un doigt ou d'une paume (50), le dispositif de vérification (100) étant destiné à mettre en oeuvre le procédé de vérification (200) selon l'une des revendications 1 à 6 et comportant:

- une lame transparente (106) sur laquelle le doigt (50) ou la paume vient en appui,
- un dispositif de capture (102) prévu pour capturer une image OCT de face d'un plan parallèle à la lame (106) du doigt ou de la paume (50) à travers la lame transparente (106),
- une unité de traitement (104) comportant:
- des moyens de calcul de matrice de co-occurrence prévus pour calculer la matrice de co-occurrence de l'image capturée,
- des moyens de calcul d'entropie prévus pour calculer l'entropie de la matrice de co-occurrence,
- des moyens de calcul de contraste prévus pour calculer le contraste de la matrice de co-occurrence,

- des moyens de calcul de moyenne prévus pour calculer la moyenne de l'image capturée,
- des moyens de comparaison prévus pour comparer les caractéristiques calculées avec des valeurs de référence de ces caractéristiques, et
- des moyens de prise de décision prévus pour prendre une décision concernant la véracité du doigt ou de la paume (50) à partir du résultat fourni par les moyens de comparaison.

8. Dispositif de vérification (100) selon la revendication 7, **caractérisé en ce que** l'unité de traitement (104) comporte en outre:

- des moyens de calcul de densité surfacique prévus pour effectuer, sur l'image capturée, une segmentation des crêtes de la peau et des pores et calculer la densité surfacique des crêtes de la peau et des pores de l'image capturée, et/ou
- des moyens de calcul de rapport prévus pour calculer le rapport entre le degré d'aplatissement et le degré d'asymétrie de la distribution de niveaux de gris de l'image capturée, et/ou
- des moyens de calcul de la densité des pixels saturés.

9. Dispositif de vérification (100) selon l'une des revendications 7 ou 8, **caractérisé en ce que** l'unité de traitement (104) comporte en outre des moyens de lissage gaussien prévus pour faire subir à l'image capturée un lissage gaussien, et **en ce que** les moyens de calcul de co-occurrence, les moyens de calcul d'entropie, les moyens de calcul de contraste, les moyens de calcul de moyenne, les éventuels moyens de calcul de densité surfacique, les éventuels moyens de calcul de rapport et les éventuels moyens de calcul de la densité des pixels saturés sont prévus pour traiter l'image lissée par les moyens de lissage gaussien.

10. Dispositif de vérification (100) selon l'une des revendications 7 à 9, **caractérisé en ce que** l'unité de traitement (104) comporte des moyens de calcul de variance prévus pour calculer la variance de l'image capturée ou lissée.

11. Dispositif de vérification (100) selon l'une des revendications 7 à 10, **caractérisé en ce que** le dispositif de capture (102) est prévu pour capturer au moins deux images OCT de face , **en ce que** l'unité de traitement (104) comporte des moyens de mesure de déplacement entre lesdites images entre elles, des moyens pour recaler lesdites images entre elles et des moyens pour générer une nouvelle image par calcul de la moyenne desdites images.

12. Dispositif de vérification (100) selon l'une des revendications 7 à 11, **caractérisé en ce que** la résolution transversale est de 0.8 à 5 microns.

13. Dispositif de vérification (100) selon l'une des revendications 7 à 12, **caractérisé en ce que** la profondeur de capture d'image est entre 10 $\mu$m et 100 $\mu$m.

14. Dispositif de vérification (100) selon la revendication 13, **caractérisé en ce que** l'unité de traitement (104) comporte alors des deuxièmes moyens de comparaison prévus pour comparer l'image capturée à des images de référence d'une base de données et **en ce que** les moyens de prise de décision sont prévus pour prendre en outre une décision concernant l'identité du porteur du doigt (50) à partir du résultat fourni par les deuxièmes moyens de comparaison.

15. Dispositif selon l'une quelconque des revendications 7 à 14 **caractérisé en ce que** le dispositif de capture (102) comprend un miroir (406) oscillant et un photo-détecteur (402) prévu pour acquérir au moins deux images pendant l'oscillation du miroir (406), **en ce que** l'unité de traitement (104) comporte des moyens de comparaison prévus pour comparer lesdites images entre elles et pour déterminer l'existence d'un mouvement du doigt ou de la paume (50) entre chaque image, des moyens de recalage prévus pour recaler les images entre elles et des moyens de calcul prévus pour calculer la composante modulée par le déplacement du miroir desdites images.

202

204

206

208

210

211

213

215

212

214

200

Fig. 2

50

100

106

102

104

Fig. 1

300

Fig. 3

400

Fig. 4

Fig. 5

Europäisches
Patentamt

European
Patent Office

Office européen
des brevets

**RAPPORT DE RECHERCHE EUROPEENNE**

Numéro de la demande

EP 14 17 7032

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EMANUELA MARASCO ET AL: "Combining perspiration- and morphology-based static features for fingerprint liveness detection", PATTERN RECOGNITION LETTERS, vol. 33, no. 9, 30 janvier 2012 (2012-01-30), pages 1148-1156, XP028413156, ISSN: 0167-8655, DOI: 10.1016/J.PATREC.2012.01.009 [extrait le 2012-01-30] | 1-5, 7-10, 12-14 | INV. G06K9/00 |
| A | * Abstract * * sections 2.2, 3.1, 3.2; figure 6 * | 6,11,15 | |
| | ----- | | |
| X | US 2008/253625 A1 (SCHUCKERS STEPHANIE [US] ET AL) 16 octobre 2008 (2008-10-16) | 1-4,7-10 | |
| A | * alinéas [0005], [0038], [0040], [0041], [0042], [0043], [0057], [0067], [0087], [0090], [0091], [0101] * | 5,6, 11-15 | |
| | | | **DOMAINES TECHNIQUES RECHERCHES (IPC)** |
| | ----- | | |
| X | ADITYA ABHYANKAR ET AL: "Fingerprint Liveness Detection Using Local Ridge Frequencies and Multiresolution Texture Analysis Techniques", IMAGE PROCESSING, 2006 IEEE INTERNATIONAL CONFERENCE ON, IEEE, PI, 1 octobre 2006 (2006-10-01), pages 321-324, XP031048638, ISBN: 978-1-4244-0480-3 * sections 1, 2.1.1 * | 1,4,7,10 | G06K |
| | ----- | | |
| X | US 2010/045788 A1 (ZHANG DAVID [HK] ET AL) 25 février 2010 (2010-02-25) * alinéas [0018], [0020], [0036] - [0038] * | 1,7 | |
| | ----- | | |
| | -/-- | | |

Le présent rapport a été établi pour toutes les revendications

| Lieu de la recherche | Date d'achèvement de la recherche | Examinateur |
|---|---|---|
| La Haye | 6 novembre 2014 | Angelopoulou, Maria |

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 14 17 7032

## DOCUMENTS CONSIDERES COMME PERTINENTS

| Catégorie | Citation du document avec indication, en cas de besoin, des parties pertinentes | Revendication concernée | CLASSEMENT DE LA DEMANDE    (IPC) |
|---|---|---|---|
| A | MALTONI D ET AL: "Handbook of Fingerprint Recognition, Liveness Detection Techniques", 1 janvier 2009 (2009-01-01), HANDBOOK OF FINGERPRINT RECOGNITION, SPRINGER, LONDON, GB, PAGE(S) 386 - 391, XP002607754, ISBN: 978-1-84882-253-5 * page 388, ligne 30 - page 389, ligne 3 * ----- | 1-15 | |
| A | Anonymous: "Image Synthesis - Noise Generation", , 29 avril 2013 (2013-04-29), XP055100631, Extrait de l'Internet: URL:http://web.archive.org/web/20130429171441/http://homepages.inf.ed.ac.uk/rbf/HIPR2/noise.htm [extrait le 2014-02-06] * le document en entier * ----- | 3,9 | |
| A | Luciano Da Fontoura Costa, Roberto Marcondes Cesar Jr.: "Shape Analysis and Classification", 1 janvier 2001 (2001-01-01), CRC PRESS, XP002719856, ISBN: 0849334934 page 433, * section 6.2.12 * ----- -/-- | 2,8 | DOMAINES TECHNIQUES RECHERCHES    (IPC) |

Le présent rapport a été établi pour toutes les revendications

| Lieu de la recherche | Date d'achèvement de la recherche | Examinateur |
|---|---|---|
| La Haye | 6 novembre 2014 | Angelopoulou, Maria |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

.......................................................................................................
& : membre de la même famille, document correspondant

EPO FORM 1503 03.82 (P04CO2)

Europäisches
Patentamt

European
Patent Office

Office européen
des brevets

# RAPPORT DE RECHERCHE EUROPEENNE

Numéro de la demande

EP 14 17 7032

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | SHANKAR BHAUSAHEB NIKAM ET AL: "Gabor Filter-Based Fingerprint Anti-spoofing", 20 octobre 2008 (2008-10-20), ADVANCED CONCEPTS FOR INTELLIGENT VISION SYSTEMS; [LECTURE NOTES IN COMPUTER SCIENCE], SPRINGER BERLIN HEIDELBERG, BERLIN, HEIDELBERG, PAGE(S) 1103 - 1114, XP019108393, ISBN: 978-3-540-88457-6 * le document en entier * | 1-15 | |
| A | US 2013/058544 A1 (SAYAC CHARLES [FR] ET AL) 7 mars 2013 (2013-03-07) * le document en entier * | 1-15 | |
| A | HREBESH MOLLY SUBHASH ET AL: "Full-Field and Single-Shot Full-Field Optical Coherence Tomography: A Novel Technique for Biomedical Imaging Applications", ADVANCES IN OPTICAL TECHNOLOGIES, vol. 1315, no. 3, 1 janvier 2012 (2012-01-01), pages 205-26, XP055150097, ISSN: 1687-6393, DOI: 10.1364/AO.36.006620 * le document en entier * | 1-15 | DOMAINES TECHNIQUES RECHERCHES (IPC) |
| A | Anonymous: "Optical coherence tomography - Wikipedia, the free encyclopedia", , 12 juillet 2013 (2013-07-12), XP055151007, Extrait de l'Internet: URL:http://en.wikipedia.org/w/index.php?title=Optical_coherence_tomography&oldid=563952640#Parallel_.28or_full_field.29_OCT [extrait le 2014-11-05] * le document en entier * | 1-15 | |

-/--

Le présent rapport a été établi pour toutes les revendications

| Lieu de la recherche | Date d'achèvement de la recherche | Examinateur |
|---|---|---|
| La Haye | 6 novembre 2014 | Angelopoulou, Maria |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 2 827 282 A1**

Europäisches
Patentamt

European
Patent Office

Office européen
des brevets

# RAPPORT DE RECHERCHE EUROPEENNE

Numéro de la demande

EP 14 17 7032

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Ramesh Jain ET AL: "Chapter 7: Texture" In: "Machine Vision", 1 janvier 1995 (1995-01-01), Mc Graw Hill, XP055151011, ISBN: 978-0-07-032018-5 pages 234-248, * section 7.2 * | 1-15 | |
| A | "Fingerprint Databases and Evaluation" In: Stan Z. Li; Anil K. Jain: "Encyclopedia of Biometrics", 1 janvier 2009 (2009-01-01), Springer, USA, XP002732016, ISBN: 978-0-387-73002-8 vol. 1, pages 452-458, * le document en entier * | 5,14 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 6 novembre 2014 | Angelopoulou, Maria |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 14 17 7032

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-11-2014

| Document brevet cité au rapport de recherche | Date de publication | Membre(s) de la famille de brevet(s) | Date de publication |
|---|---|---|---|
| US 2008253625 A1 | 16-10-2008 | US 2008253625 A1<br>US 2008253626 A1<br>US 2012087553 A1<br>US 2013294663 A1<br>US 2014270419 A1 | 16-10-2008<br>16-10-2008<br>12-04-2012<br>07-11-2013<br>18-09-2014 |
| US 2010045788 A1 | 25-02-2010 | AUCUN | |
| US 2013058544 A1 | 07-03-2013 | AUCUN | |

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Y.S. MOON et al.** Wavelet based fingerprint liveness détection. *Electron. Lett.,* 2005, vol. 41 (20), 1112-1113
- **ARNAUD DUBOIS ; KATE GRIEVE ; GAEL MONERON ; ROMAIN LECAQUE ; LAURENT VABRE ; CLAUDE BOCCARA.** Ultrahigh-resolution full-field optical coherence tomography. *APPLIED OPTICS,* 10 Mai 2004, vol. 43 (14), 2874-2883

- **ASSAYAG, O. ; ANTOINE, M. ; SIGAL-ZAFRANI, B. ; RIBEN, M. ; HARMS, F. ; BURCHERI, A. ; GRIEVE, K. ; DALIMIER, E. ; LE CONTE DE POLY, B. ; BOCCARA, C.** Large Field, High Resolution Full-Field Optical Coherence Tomography: A Pre-clinical Study of Human Breast Tissue and Cancer Assessment. *Technol Cancer Res Treat,* 2014, vol. 13, 455-468